# EUROPEAN PATENT APPLICATION

(11) **EP 0 795 267 A2**
(43) Date of publication of application: **17.09.1997**
(21) Application number: 97200786.8
(22) Date of filing: 17.03.1997
(51) Int. Cl.: A01G 25/00

(54) **Fluid container with auxiliary reservoir**

(30) Priority: 15.03.1996 NL 1002619
(71) Applicant: First Design B.V., 7514 DP Enschede (NL)
(72) Inventor: Barrink, Emile Robert, 7521 CP Enschede (NL)
(74) Representative: Schumann, Bernard Herman Johan

(57) **Abstract**

A container for a liquid, comprising a housing that can be lifted by hand, e.g. by means of a handle attached to the housing, a fill opening and an opening for pouring liquid,
which container comprises:
a reservoir for a substance to be added to the liquid, which reservoir comprises means for release of the substance present therein to the liquid present in the housing.

The container has the feature that the release means comprise dosage means manageable through manual operation means;
the operation means comprise a spring-loaded push button extending outside the shell at a distance from the fill opening; and
the push button can be operated by a user using a finger, in particular the thumb, of the hand with which he first grasped the housing, possibly using the handle.

## Description

The invention relates to a container for a liquid, e.g. water, which container comprises a housing that can be lifted by hand, e.g. by means of a handle attached to the housing, a fill opening and an opening for pouring liquid,
which container comprises:
a reservoir for a substance to be added to the liquid, e.g. a solution, a liquid concentrate, a salt in powdered or granulated form, or the like, which reservoir comprises means for emitting of the substance present therein to the liquid present in the housing.

Such a container is known, for example, from BE-A-1004707 and (probably) BE-A-1005426.

Such a container is known in various designs, e.g. as a can for watering plants, a spray bottle for spraying objects, or the like.

Nutrients are often added to the water in a watering can. These can be in the form of a liquid, a powder or granules.

A purpose of the invention is to simplify the dosage of such a substance, by which the concentration of the substance in the liquid, e.g. a nutrient concentrate in water, is made more manageable.

In connection with this purpose, the container, according to the invention, has the feature that the emitting means comprise controlable dosage means by means of manually operated control means;
the control means comprise a spring-loaded push button protruding from the housing at a distance from the fill opening; and
the push button can be operated by a user with a finger, particularly the thumb, of the hand with which he previously grasped the housing, possibly by the handle.

It is noted that a device is known from EP-A-4 790 454, the operation of which is materially different and distinctive from the invention. According to this document, mixture occurs during release. The device has an industrial character and comprises no manual control means for dosage in advance of the liquid to be added.

Reference is also made to EP-A-0 117 947. Whereas the container known from this does comprise an accessory reservoir, the additive released from same is not dissolved in or mixed with the solution present in the container, but rather added through a separate nozzle either selectively or if so desired in combination with a watering operation.

A practical embodiment has the special feature that the reservoir is detachable. Such an embodiment may have the advantage that the reservoir can be exchanged as a separate pattern with another pattern, e.g. to be able to add another additive to, for example, the water to the container.

A cheaper embodiment has the special feature that the reservoir is attached to the container or integrated with it.

In particular in the case in which the additive to be added is a liquid, the dosage means may beneficially comprise pumping means. This latter embodiment may be manufactured in such a way that the pumping means comprise a double one-way valve located between the reservoir and the housing, with a buffer space between two valves and the control means comprise a spring-loaded push button, which when pressed, causes the one-way valve to release at least part of the contents of the buffer space to the housing.

To easily determine how much of the substance is in the reservoir, the holder may have the special feature that the reservoir is at least partly translucent, e.g. transparent.

This latter embodiment may for example be manufactured in such a way that the reservoir consists of polystyrene, clear polypropylene or polycarbonate.

A specific embodiment has the feature that the reservoir has a fill opening. The aforementioned model in which the reservoir is detachable, may be beneficially manufactured in such a way that the reservoir is located in a cavity which is part of the housing, externally accessible, and held in same by holding means. It is noted that this cavity may also form a limitation of the fill opening.

Said cavity may, in principle, be situated in any practical and desired location. A certain embodiment has the feature that the cavity is situated on top of the container.

Another embodiment features the cavity at the bottom of the container.

A preferred embodiment has the feature that the push button is integrated with the reservoir, for example, inseparably connected with a lock lid of same.

Contrary to the disclosed prior art according to BE-A-1004707, the container according to the invention preferably has the feature that the release means discharge into the container at a distance from the fill opening at a distance from the housing. In this way, the release means are effectively accommodated in the container and protected from touching, while the structure according to the said prior art referred is not aesthetically very appealing.

The said embodiment in which the reservoir is accommodated in an externally accessible cavity which is part of the housing, and is held in same by holding means, can be embodied in such a way that the holding means comprise snapping means.

An alternative model has the feature that the holding means comprise screw means. This latter embodiment may for example use the screw thread present at the mouth of a reservoir, which was used to close the reservoir prior to use with a screw top. In this embodiment a plastic bottle available on the market, containing the additive to be added to the water, might be used to the advantage of the consumer that same may use a standard package of, for example, nutrients for plants.

The invention will now be explained on the basis of the drawings provided below. The following is illustrated:
Fig. 1 a partially cut cross-sectional view of a watering can according to the invention at rest;
Fig. 2 a view of the watering can corresponding with fig. 1, in which the user adds concentrate to the water in the watering can;
Fig. 3 a partially cut cross-sectional view of a spraying can according to the invention;
Fig. 4 a view of a watering can with another type of reservoir, corresponding with fig. 1; and
Fig. 5 a view of the watering can corresponding with fig. 4, in the situation where the reservoir is opened.

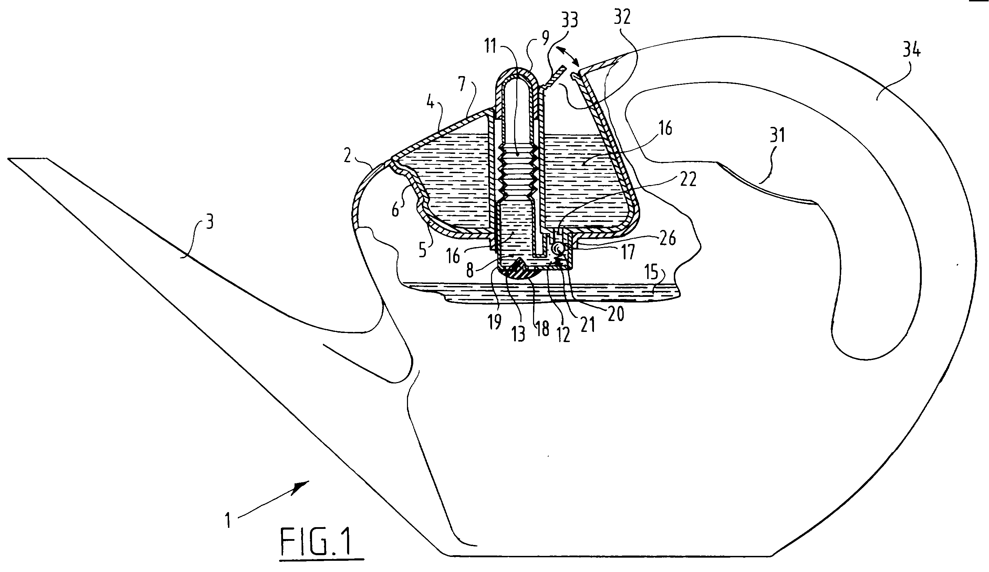

Fig. 1 shows a watering can 1, comprising a fluid-tight housing 2 with a spout 3.

A transparent polystyrene reservoir 4 has been added to housing 2, which reservoir may for example lightly snappingly fits in a dedicated space in housing 2 made of polythene. This space is bordered by a wall section 5, protruding inward, with undercut 6. As fig. illustrates, outer surface 7 of reservoir 4 fits seamlessly to outer surface 8 of housing 2.

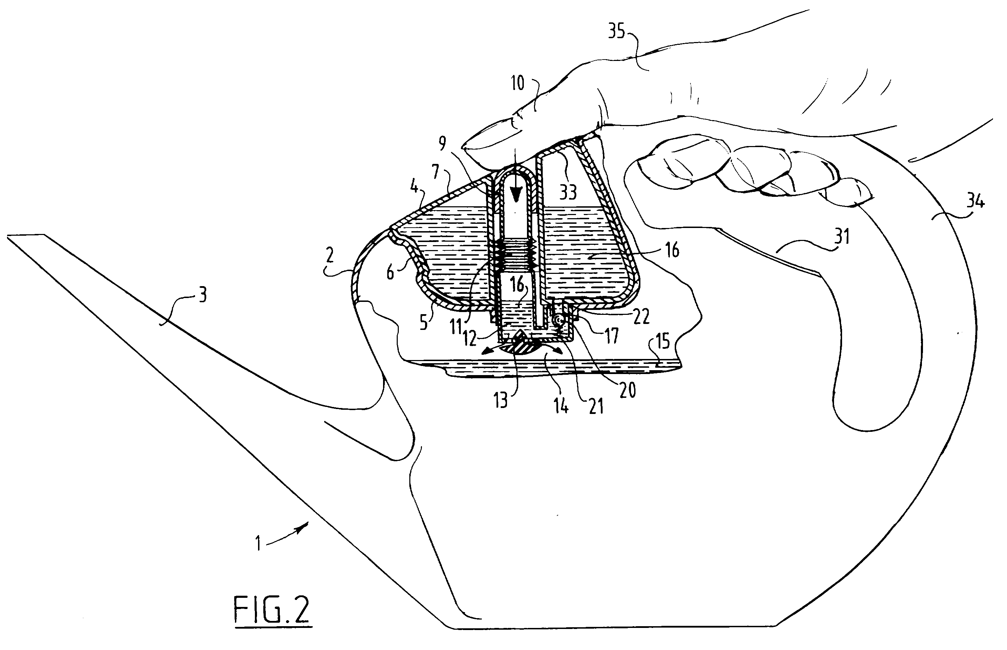

A pump 8 has been added to reservoir 4. It comprises a push button 9, which can be operated on the outside, e.g. pushed with the thumb 10 as illustrated in fig. 2. This causes an effective volume decrease of bellows 11, as a result of which nutrient fluid 16 present in space 12 is released in a dose via a one-way valve 13 according to arrows 14 into the water 15 present in housing 2, to which water the nutrient fluid 16 is thus added. The pressure which is created in space 12 of fig. 2 closes a one-way valve 17. Once the dosed discharge is completed according to fig. 2, push button 9 is brought back to its original situation as illustrated in fig. 1. During this transition, one-way valve 13 closes and one-way valve 17 opens, which causes the nutrient fluid 16 to flow from reservoir 4 into space 12.

It will be clear that pump 8 may thus add an easily controllable nutrient fluid 16 to the water 16.

One-way valve 13 comprises a rubbery valve part 18, which fits in a passageway in wall 19 of space 12 with a handle with play. A widening located on the inside thus affixes valve part 18 to wall 19. At rest, the widening closes the passageway. When pressure is exerted according to fig. 2, the flexible outer widened part opens.

One-way valve 17 comprises a ball 20 presses upwards by a spring 21 as shown in figures 1 and 2, which ball can close off an opening 22 in the wall of reservoir 4. In the situation illustrated in fig. 2, valve 17 is closed and it is opened when the user releases push button 9, which returns the watering can to the situation illustrated in fig. 1. Spring 21 is not needed because when button 9 is used, the flow of fluid 16 thus created presses ball 22 against the circumference of opening 22 and shuts it tight.

Housing 2 features a fill opening 31 for the filling of housing 2 with water 15.

Reservoir 4 features a fill opening 32 which can be snapped shut by a lid 33.

A handle 34 has been formed onto housing 2. The position of push button 9 compared to handle 34 is such that a user may grasp handle 34 with his hand 35 to lift and use watering can 1, and if so desired may simultaneously press push button 9 with his thumb 10 for the dosed release of nutrient fluid 16 according to arrows 14.

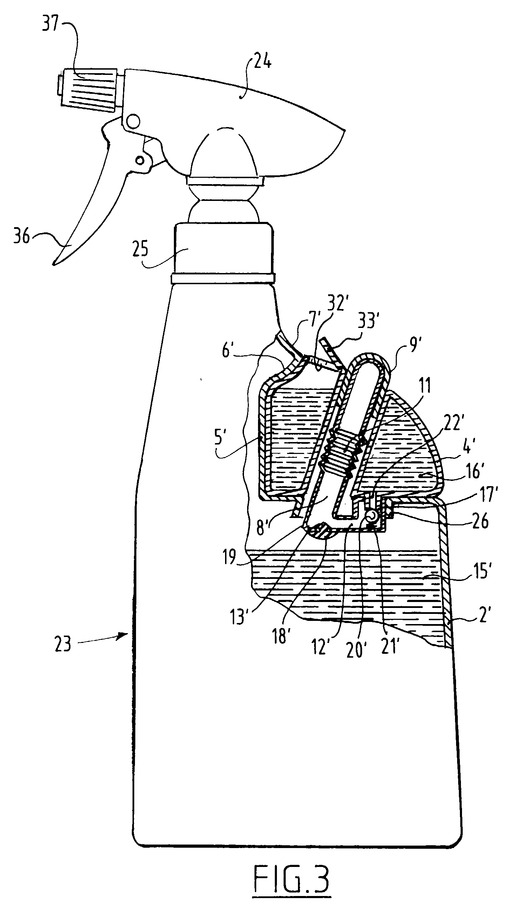

Fig. 3 shows an alternative. This figure illustrates all parts which functionally correspond to parts according to figures 1 and 2 using the same reference numbers these figures use, but where applicable an emphasis has been added. The container according to the invention in this embodiment is a spray 23. It comprises a spray gun 24 of a well-known type. The spray also comprises a reservoir 4'. Figure 3 uses the same reference numbers for all parts which functionally correspond to parts according to figures 1 and 2, but where applicable an emphasis has been added. Figure 3 therefore does not need any further discussion.

Attention is drawn to the fact that spray 23 may for example be filled with water 15' by unscrewing screw lid 25, thus giving access to a fill opening. The watering can according to fig. 1 also features such an opening (31), but may also be filled by the temporary removal of reservoir 4 and filling with water 14 of housing 2 via opening 26.

Attention is drawn to the fact that fluid 16' according to fig. 3 may for example also be a cleaning concentrate for cleaning objects.

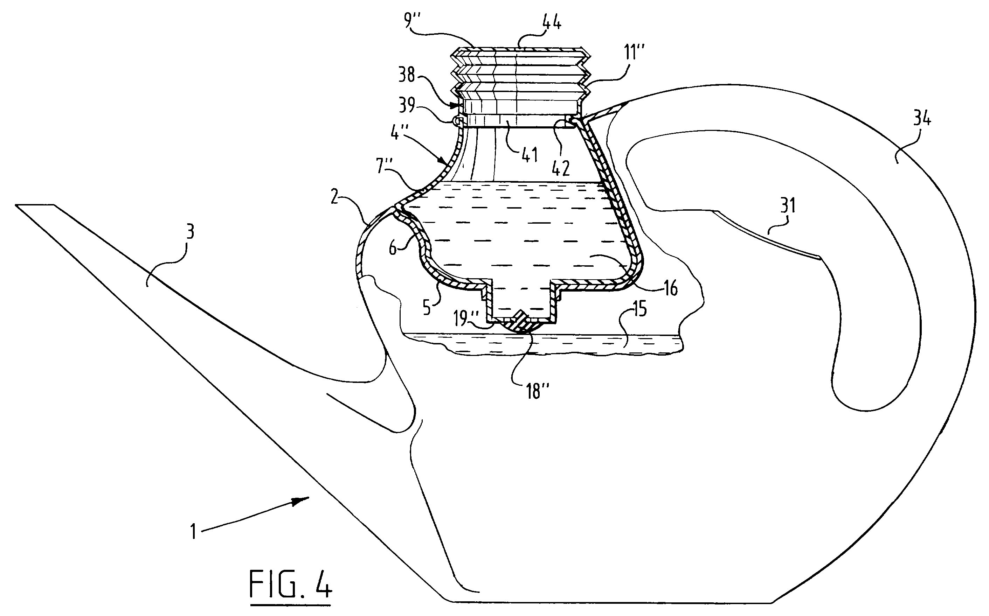

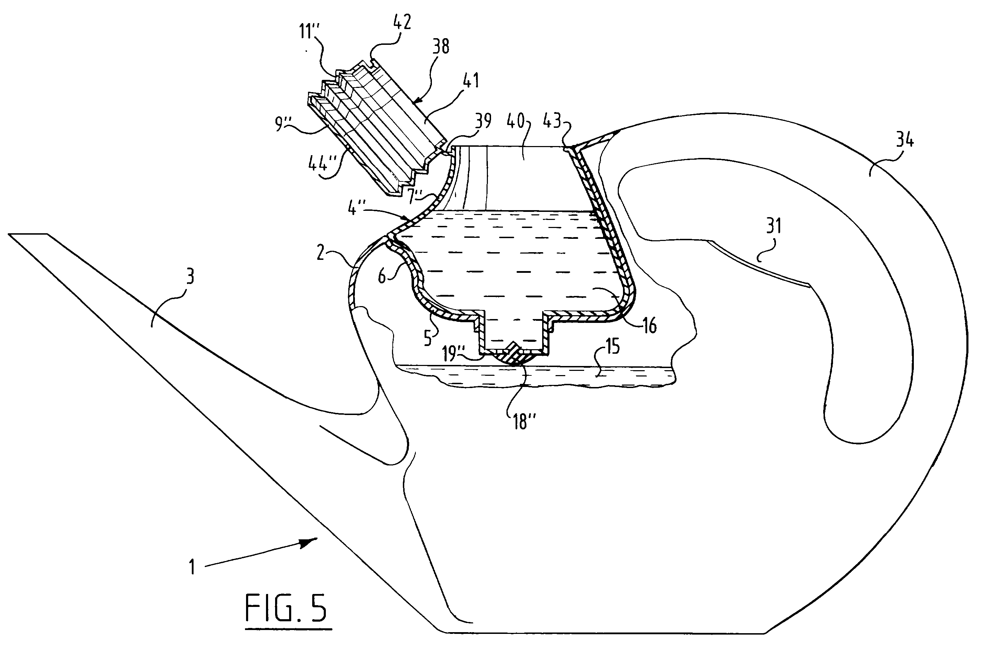

Figures 4 and 5 show an embodiment in which the reservoir features a pump of a simpler manufacture, which is therefore cheaper than the pump according to figures 1, 2 and 3.

It is noted that in these figures 4 and 5 all parts which functionally correspond to parts according to figures 1 and 2 have been given the same reference numbers, however with the addition of two emphases.

Reservoir 4 is equipped with a closing lid 38. This closing lid is attached to reservoir 4 by a film hinge 39. Thus closing lid 31 may be moved between the closes situation illustrated in fig. 4 and the open situation illustrated in fig. 5. In the situation according to fig. 4, closing lid 38 closes opening 40 of reservoir 4' tight. The side of circumferential edge 41 of closing lid 38 facing away from film hinge 39 features a protruding edge part 42 which snaps onto a complementary edge part 43, which protrudes on the inside from opening 40.

Closing lid 38 comprises a flexible bellows 11'', the upper surface 9'' of which services as a push button for the removal of fluid 16 via valve 18'' by pumping action from reservoir 4. Push button 9'' features a central passageway 44 which the user closes off by pressing push button 9'' with his thumb. The user thus carries out the same action as illustrated in fig. 2. Pressing push button 9'' while simultaneously closing off passageway 44, bellows 11'' is compressed, causing fluid 16 to leave reservoir 4'' via valve 18'' and be released into the water 15.

In the situation shown in fig. 5, reservoir 4'' can be filled again.

In general, the invention is aimed at the controlled addition of a certain quantity of a substance, while the holder himself is carrying the reservoir for such substance, and preferably means are present for the dosing of the substance to be added in accordance with the wishes of the user.

An essential aspect of the invention is that a reservoir has been added to the container, which reservoir may contain an additive which, prior to release, must be dissolved in or mixed with the fluid present in the container, usually water. The dosed release of the additive takes place by operating a push button which is located where the user can operate it while having lifted the container if so desired. Reference is made in this connection to the fact that in the embodiment according to figure 3 housing 2' may be grasped by hand to be lifted. A handle is not required in such an embodiment. If so desired, after having administered the dosage in question, the user may move his hand so that trigger 36 of spray gun 24 may be operated by, for example, his index finger for the discharge via spout 37 of mixture or solution 15', in this case water to which additive 16' has been added from reservoir 4'.

## Claims

1. Container for a liquid, e.g. water, which container comprises a housing that can be lifted by hand, e.g. by means of a handle attached to the housing, a fill opening and an opening for pouring liquid,
which container comprises:
a reservoir for a substance to be added to the liquid, e.g. a solution, a liquid concentrate, a salt in powdered or granulated form, or the like, which reservoir comprises means for emitting of the substance present therein to the liquid present in the housing
**characterized in that**
the emitting means comprise controllable dosage means by means of manually operated control means;
the control means comprise a spring-loaded push button protruding from the housing at a distance from the fill opening; and
the push button can be operated by a user with a finger, particularly the thumb, of the hand with which he previously grasped the housing, possibly by the handle.

2. Container according to claim 1,
**characterized in that** the reservoir is detachable.

3. Container according to claim 1,
**characterized in that** the reservoir is connected to or integrated with the container.

4. Container according to claim 3,
**characterized in that** the dosage means comprise pumping means.

5. Container according to claim 4,
**characterized in that** the pumping means comprise a double one-way valve located between the reservoir and the housing, with a buffer space between two valves, and the control means comprise a spring-loaded push button, which when pressed, causes the one-way valve to release at least part of the contents of the buffer space to the housing.

6. Container according to claim 1,
**characterized in that** the reservoir is at least partly translucent, for example transparent.

7. Container according to claim 6, **characterized in that** the reservoir is comprised of
polystyrene, clear polypropylene or polycarbonate.

8. Container according to claim 1,
**characterized in that** the reservoir comprises a fill opening.

9. Container according to claim 2,
**characterized in that** the reservoir is located in a cavity which is part of the housing, externally accessible and held in same by holding means.

10. Container according to claim 9,
**characterized in that** the cavity is located on top of the container.

11. Container according to claim 9,
**characterized in that** the cavity is located at the bottom of the container.

12. Container according to claim 1,
**characterized in that** the push button is integrated with the reservoir, for example inseparably connected with a lock lid of same.

13. Container according to claim 1,
**characterized in that** the release means discharge into the container at a distance from the fill opening at a distance from the housing.

14. Container according to claim 9,
**characterized in that** the holding means comprise snapping means.

15. Container according to claim 9,
**characterized in that** the holding means comprise screwing means.
